# FASCICULE DE BREVET EUROPEEN

(11) **EP 0 875 974 B1**
(45) Date de publication et mention de la délivrance du brevet: **03.12.2003**
(21) Numéro de dépôt: 98401024.9
(22) Date de dépôt: 27.04.1998
(51) Int. Cl.: H02G 3/08

(54) **"Boîte d'encastrement pour cloison sèche à entrée(s) de tube articulée(s), notamment pour appareillage électrique"**
Unterputzdose in einer Wand geringer Dicke für elektrisches Gerät mit einer Leitungsklappeinführung
Thin wall flush mounted box with hinged tubing entries for electrical apparatus

(30) Priorité: 29.04.1997 FR 9705268
(43) Date de publication de la demande: 04.11.1998
(73) Titulaire: LEGRAND, F-87000 Limoges (FR); LEGRAND SNC, F-87000 Limoges (FR)
(72) Inventeur: Costes, Jean-Christophe, 87270 Chaptelat (FR)
(74) Mandataire: Santarelli

(56) Documents cités:
- FR-A- 2 367 403

## Description

La présente invention concerne d'une manière générale les boîtes d'encastrement du type de celles mises en oeuvre pour encastrer un quelconque appareillage dans une cloison sèche.

Ainsi qu'on le sait, une cloison sèche est une cloison élaborée à sec à partir d'éléments préfabriqués, et, en général, elle présente, sous des configurations diverses, à l'arrière d'une paroi de façade en général relativement mince, un vide interne mis à profit pour la circulation de diverses canalisations et/ou de fils électriques.

Pour l'encastrement d'un appareillage dans une telle cloison sèche, la paroi de façade est découpée, et la boîte d'encastrement à mettre en oeuvre est engagée dans l'ouverture ainsi dégagée dans cette paroi de façade.

La présente invention vise plus particulièrement le cas où, cet appareillage étant un appareillage électrique, il doit être raccordé, pour sa desserte, aux fils électriques circulant dans le vide interne de la cloison.

Pour faciliter la pénétration de ces fils électriques dans la boîte d'encastrement mise en oeuvre, ou, plus précisément, pour faciliter la pénétration, dans celle-ci, du tube, en général annelé, dans lequel ces fils électriques sont usuellement disposés pour leur protection et leur isolement, il est usuel de prévoir, dans la paroi latérale de cette boîte d'encastrement, un passage, qui, prédécoupé dans cette paroi latérale, est initialement occulté par un opercule défonçable qu'il suffit, alors, d'éliminer.

Mais, l'ouverture ménagée dans la paroi de façade de la cloison suivant en général au plus près le contour de la boîte d'encastrement, l'engagement du tube dans celle-ci ne peut se faire qu'en dehors de cette cloison, avant sa mise en place dans cette dernière, et il ne peut en pratique être assuré qu'à travers la paroi de fond de la boîte d'encastrement, pour que l'engagement de celle-ci dans l'ouverture ménagée dans la paroi de façade de la cloison puisse encore être possible.

Il est donc usuel (voir par exemple FR-A-2 367 403) de prévoir également, dans cette paroi de fond, en correspondance avec le passage de la paroi latérale, pour l'engagement du tube contenant les fils électriques, un évidement, qui, mordant sur la paroi latérale, recoupe le passage de celle-ci, et qui, lui aussi, est initialement occulté par un opercule.

L'ensemble constitue alors ce qui est communément appelé une "entrée de tube".

A ce jour, l'opercule occultant l'évidement de la paroi de fond est un opercule défonçable, comme celui occultant le passage de la paroi latérale.

Or, une fois la boîte d'encastrement installée dans la cloison à équiper, le tube précédemment engagé dans l'évidement de sa paroi de fond gagne de lui-même le passage de la paroi latérale, sous les seuls effets de l'action d'engagement appliquée à la boîte d'encastrement pour sa mise en place, et il retrouve ainsi son implantation naturelle par rapport à celle-ci.

Il en résulte qu'il subsiste, intempestivement, dans la paroi de fond de la boîte d'encastrement, un évidement, qui, libéré par le tube qui y a été initialement engagé, est totalement dégagé, au préjudice, notamment, de l'étanchéité de cette boîte d'encastrement aux corps solides de dimensions relativement notables, du type, par exemple, des débris susceptibles de subsister de manière non nécessaire dans le vide interne d'une cloison sèche.

De tels débris peuvent induire un risque de dysfonctionnement pour l'appareillage électrique concerné.

La présente invention a d'une manière générale pour objet une disposition permettant d'éviter cet inconvénient.

De manière plus précise, elle a pour objet, une boîte d'encastrement du genre comportant une paroi de fond et une paroi latérale, avec, prédécoupé dans sa paroi latérale, au moins un passage occulté par un opercule défonçable, et, prédécoupé dans sa paroi de fond, en correspondance avec le passage de la paroi latérale, un évidement, qui, mordant sur la paroi latérale, recoupe ce passage, et qui, lui aussi, est occulté par un opercule, caractérisée en ce que l'opercule occultant l'évidement de la paroi de fond est articulé à demeure à celle-ci et est équipé de moyens d'engagement propres à permettre de le mettre en prise avec un tube à engager dans le passage, de sorte que c'est ce tube qui, lors de la mise en place de la boîte d'encastrement dans la cloison creuse à équiper, ramène, automatiquement, et systématiquement, de lui-même, à sa position initiale d'occultation, l'opercule associé à l'évidement de la paroi de fond de cette boîte d'encastrement.

Ainsi, au lieu d'être éliminé, cet opercule reste avantageusement en place, et, lors de l'engagement de la boîte d'encastrement dans l'ouverture ménagée dans la paroi de façade de la cloison creuse à équiper, il est avantageusement susceptible de reprendre sa position initiale, en occultant donc, à nouveau, l'évidement de la paroi de fond de cette boîte d'encastrement.

Cette paroi de fond retrouve donc, avantageusement, son intégrité.

En particulier, elle retrouve son étanchéité initiale à l'égard des corps solides dont la dimension la plus petite est supérieure à 1 mm.

En outre, l'insonorisation assurée par la boîte d'encastrement se trouve rétablie.

En bref, la ou les entrées de tube que présente la boîte d'encastrement suivant l'invention sont en quelque sorte avantageusement articulées.

En outre, la tenue du ou des tubes correspondants se trouve avantageusement renforcée.

Les caractéristiques et avantages de l'invention ressortiront d'ailleurs de la description qui va suivre, à titre d'exemple, en référence aux dessins schématiques annexés sur lesquels :
la figure 1 est une vue en perspective, en partie éclatée, d'une boîte d'encastrement suivant l'invention, vue de l'arrière ;
la figure 2 est, à échelle supérieure, une vue partielle en coupe axiale de cette boîte d'encastrement, suivant la ligne brisée II-II de la figure 1 ;
la figure 3 en est une autre vue partielle en coupe axiale, suivant la ligne brisée III-III de la figure 1 ;
les figures 4A, 4B sont des vues en perspective, qui, déduites de celle de la figure 1, illustrent deux phases successives de mise en oeuvre de la boîte d'encastrement suivant l'invention ;
la figure 5 est, suivant la ligne brisée V-V de la figure 4B, une vue partielle en coupe axiale de cette boîte d'encastrement au terme de sa mise en oeuvre ;
la figure 6 est une vue en perspective, qui, analogue à celle de la figure 1, se rapporte à une variante de réalisation ;
la figure 7 reprend, à échelle supérieure, le détail de la figure 6 repéré par un encart VII sur cette figure 6 ;
la figure 8 est une vue partielle en perspective analogue à celle de la figure 7, et en partie éclatée, pour une position pivotée de l'opercule représenté.

Tel qu'illustré sur ces figures, et de manière connue en soi, la boîte d'encastrement 10 suivant l'invention comporte, globalement, une paroi de fond 11 et une paroi latérale 12.

Dans les formes de réalisation représentées, elle a, en section transversale, un contour circulaire, et elle comporte, en saillie vers l'extérieur, le long du bord libre de sa paroi latérale 12, un rebord 13.

Cette boîte d'encastrement 10 ne sera pas décrite dans tous ses détails ici, et elle n'a pas non plus été représentée dans tous ses détails sur les figures.

Seules ont été représentées sur ces figures, et seules seront donc décrites dans ce qui suit, les dispositions nécessaires à la compréhension de l'invention.

De manière connue en soi, la boîte d'encastrement 10 suivant l'invention comporte, prédécoupé dans sa paroi latérale 12, au moins un passage 14, qui est occulté par un opercule défonçable 15, et, prédécoupé dans sa paroi de fond 11, en correspondance avec le passage 14 de la paroi latérale 12, un évidement 16, qui, mordant sur la paroi latérale 12, recoupe ce passage 14, et qui, lui aussi, et suivant des dispositions décrites plus en détail ultérieurement, est occulté par un opercule 18.

Dans les formes de réalisation représentées, quatre passages 14, dont seuls trois sont plus ou moins visibles sur les figures, sont prévus, en croix, sur la paroi latérale 12, avec un nombre égal d'évidements 16, à raison d'un évidement 16 par passage 14.

Les opercules défonçables 15 correspondants ont, par exemple, et tel que représenté, un contour circulaire.

Suivant l'invention, l'opercule 18 occultant un évidement 16 de la paroi de fond 11 est articulé à demeure à celle-ci, par une zone charnière 20.

Cet opercule 18 intervient donc à la manière d'un volet.

Préférentiellement, et cela est le cas dans les formes de réalisation représentées, l'opercule 18 occultant l'évidement 16 de la paroi de fond 11 est d'un seul tenant avec celle-ci, en formant avec elle, et avec le reste de la boîte d'encastrement 10, une seule et même pièce, et la zone charnière 20 par laquelle il est articulé à cette paroi de fond 11 est une zone de moindre épaisseur pour celle-ci.

Bien entendu, cette zone charnière 20 s'étend de manière rectiligne.

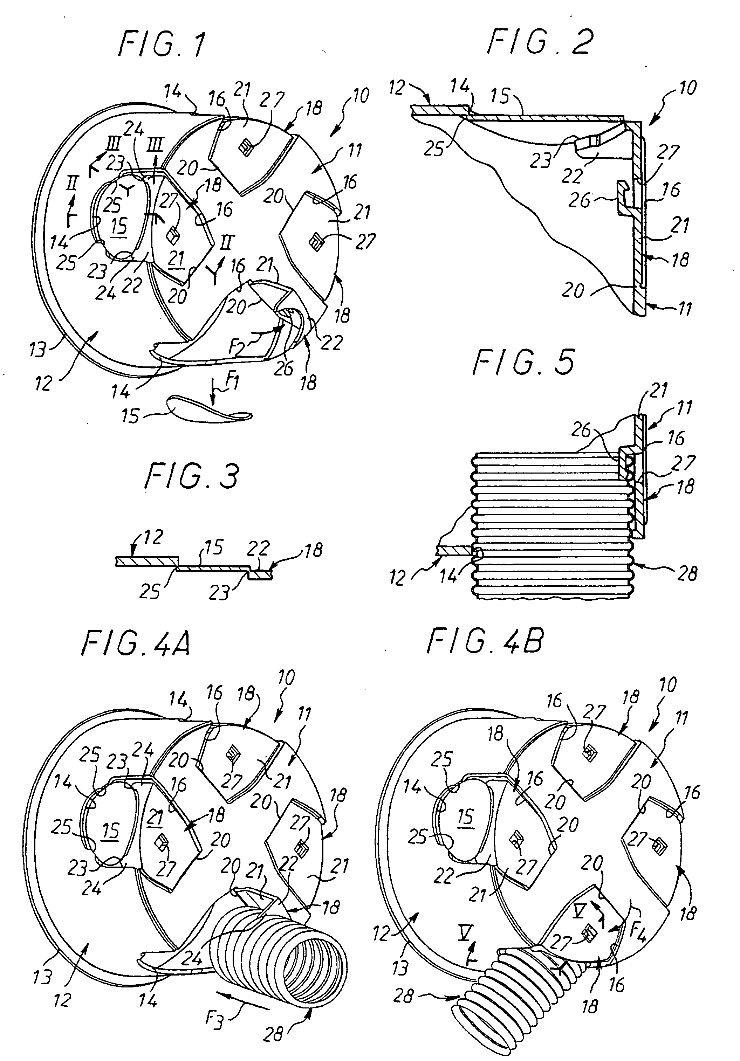

Dans la forme de réalisation plus particulièrement représentée sur les figures 1 à 4, elle s'étend en continu sur toute la longueur de la ligne d'articulation correspondante.

Dans les formes de réalisation représentées, l'opercule 18 occultant un évidement 16 de la paroi de fond 11 comporte, d'équerre l'un avec l'autre, deux pans 21, 22, à savoir, un pan de fond 21, qui appartient à la paroi de fond 11, et un pan latéral 22, qui appartient à la paroi latérale 12, et, par son pan latéral 22, il se rattache par au moins une zone sécable 23 à l'opercule défonçable 15 occultant le passage 14 correspondant de la paroi latérale 12.

Par exemple, et tel que représenté, le pan latéral 22 de l'opercule 18 occultant un évidement 16 de la paroi de fond 11 forme deux bras 24, qui s'étendent à distance l'un de l'autre, et qui, au contact de l'opercule défonçable 15 occultant le passage 14 correspondant de la paroi latérale 12, se terminent chacun par une zone sécable 23.

D'un bras 24 à l'autre, le pan latéral 22 de l'opercule 18 occultant un évidement 16 de la paroi de fond 11 suit, au plus près, et, donc, suivant un contour circulaire, l'opercule défonçable 15 occultant le passage 14 correspondant de la paroi latérale 12.

Dans la forme de réalisation plus particulièrement représentée sur les figures 1 à 4, l'opercule défonçable 15 occultant un passage 14 de la paroi latérale 12 se rattache par ailleurs directement à celle-ci, par au moins une zone sécable 25.

Par exemple, et tel que représenté, deux zones sécables 25 sont prévues, et ces deux zones sécables 25 sont chacune respectivement en positions diamétralement opposées par rapport aux deux zones sécables 23 précédentes.

Dans la forme de réalisation représentée, l'opercule défonçable 15 occultant un passage 14 de la paroi latérale 12 est en retrait vers l'intérieur par rapport au reste de cette paroi latérale 12, et, ainsi qu'il est mieux visible pour l'une d'elles sur la figure 3, les zones sécables 25 qui le relient à cette paroi latérale 12 sont des zones de moindre épaisseur résultant du décrochement correspondant.

De même, dans la forme de réalisation représentée, le pan latéral 22 d'un opercule 18 occultant un évidement 16 de la paroi de fond 11 est en retrait vers l'intérieur par rapport à l'opercule défonçable 15 occultant le passage 14 correspondant de la paroi latérale 12, et, ainsi qu'il est visible pour l'une d'elles sur la figure 3, les zones sécables 23 qui le relient à cet opercule défonçable 15 sont des zones de moindre épaisseur résultant du décrochement correspondant.

Dans la forme de réalisation représentée, le pan de fond 21 de l'opercule 18 occultant un évidement 16 de la paroi de fond 11 a une épaisseur réduite par rapport à celle du reste de cette paroi de fond 11.

Par exemple, et tel que représenté, la surface extérieure du pan de fond 21 est en retrait par rapport à la surface extérieure du reste de la paroi de fond 11.

Par ailleurs, dans les formes de réalisation représentées, l'opercule 18 occultant un évidement 16 de la paroi de fond 11 est équipé de moyens d'engagement propres à permettre de le mettre en prise avec un tube 28.

Dans la forme de réalisation plus particulièrement représentée sur les figures 1 à 4, ces moyens d'engagement comportent un crochet 26, qui, en saillie sur la surface intérieure d'un tel opercule 18, s'étend en direction du passage 14 correspondant de la paroi latérale 12.

Pour le moulage de ce crochet 26, l'opercule 18 comporte, en regard de celui-ci, un ajour 27.

Décrites pour un évidement 16 de la paroi de fond 11 et pour le passage 14 correspondant de la paroi latérale 12, les dispositions qui précèdent se retrouvent bien entendu pour chacun des évidements 16 et pour chacun des passages 14.

Si, lors de la mise en place de la boîte d'encastrement 10 dans une cloison sèche, non représentée, dans la paroi de façade de laquelle a été au préalable découpée à cet effet une ouverture au contour de la paroi latérale 12 de cette boîte d'encastrement 10, un tube 28 servant de logement à des fils électriques également non représentés doit être engagé dans cette boîte d'encastrement 10, il peut, par exemple, être procédé comme suit.

Dans un premier temps, et tel que représenté sur la figure 1, l'opercule défonçable 15 occultant le passage 14 de la paroi latérale 12 correspondant sensiblement à l'implantation du tube 28 dans la cloison sèche concernée est éliminé, tel que schématisé par la flèche F1 sur la figure 1, et l'opercule 18 occultant l'évidement 16 correspondant de la paroi de fond 11 est rabattu vers l'extérieur, tel que schématisé par la flèche F2 sur cette figure 1.

Le tube 28, dont l'extrémité est extraite à cet effet de la cloison sèche concernée, est alors engagé dans la boîte d'encastrement 10, parallèlement à l'axe de celle-ci, à la faveur de l'évidement 16 précédemment dégagé de sa paroi de fond 11, tel que schématisé par une flèche F3 sur la figure 4A, jusqu'à venir en prise avec le crochet 26 prévu à cet effet sur l'opercule 18 correspondant, tel que représenté sur la figure 5.

Lors de la mise en place de la boîte d'encastrement 10 dans la cloison sèche concernée, qui s'accompagne d'un refoulement du tube 28 dans celle-ci, ce tube 28, qui, au terme de cette mise en place, vient s'emboîter dans le passage 14 correspondant, lui-même préalablement dégagé, de la paroi latérale 12, assure, automatiquement, et systématiquement, par lui-même, le retour de l'opercule 18 dans sa position initiale d'occultation de l'évidement 16 de la paroi de fond 11, tel que schématisé par une flèche F4 sur la figure 4B, en tirant pour ce faire sur cet opercule 18 à la faveur du crochet 26 de celui-ci, et en provoquant ainsi le rabattement de cet opercule 18 autour de sa zone charnière 20.

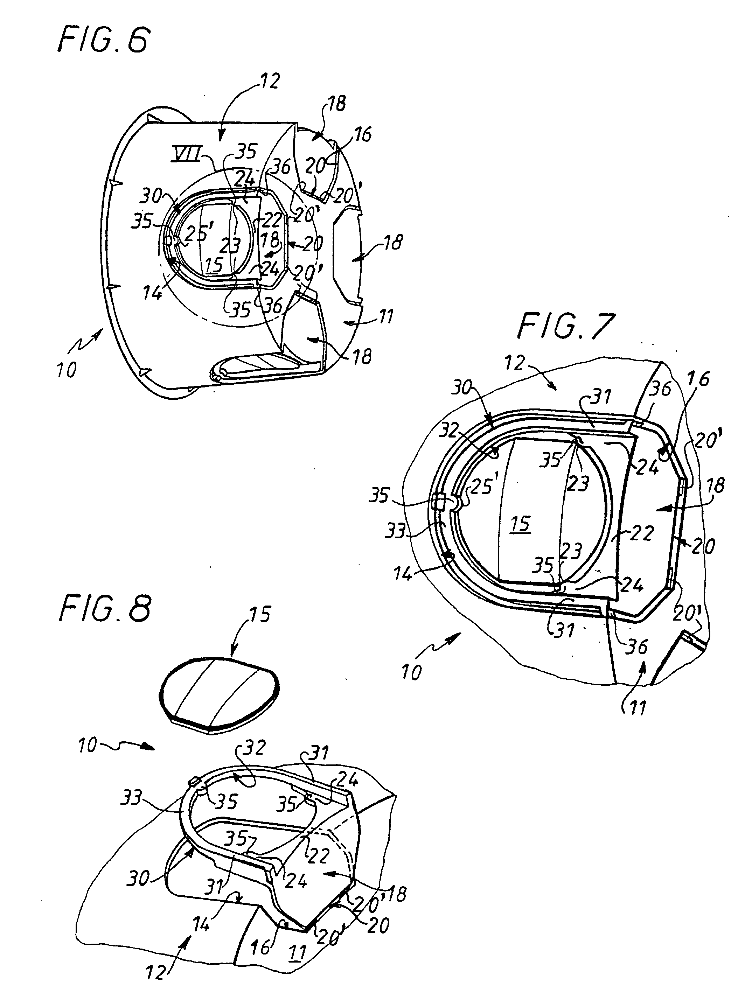

Suivant la variante de réalisation représentée sur les figures 6 à 8, le pan latéral 22 de l'opercule 18 occultant l'évidement 16 de la paroi de fond 11 se prolonge, pour chacun des opercules 18, par une anse 30, qui suit, au plus près, le contour du passage 14 correspondant de la paroi latérale 12, en intervenant entre ce passage 14 et l'opercule défonçable 15 correspondant.

En pratique, dans la forme de réalisation représentée, l'anse 30 se rattache, latéralement, à sa base, par l'extrémité de ses jambages 31, aux bras 24 formés par le pan latéral 22.

L'anse 30 délimite, avec ces bras 24, une ouverture 32, qui est sensiblement circulaire, et à la faveur de laquelle intervient l'opercule défonçable 15.

Comme précédemment, l'opercule défonçable 15 se rattache à chacun des bras 24 du pan latéral 22 de l'opercule 18 par une zone sécable 23.

Dans la forme de réalisation représentée, l'opercule défonçable 15 se rattache également par au moins une zone sécable 25' à l'anse 30.

Par exemple, et tel que représenté, seule une zone sécable 25' est prévue, et celle-ci intervient à la partie sommitale 33 de l'anse 30.

Ainsi, dans cette variante de réalisation, l'opercule défonçable 15 occultant un passage 14 de la paroi latérale 12 ne se rattache pas directement à cette paroi latérale 12.

Dans la forme de réalisation représentée, l'anse 30 est en saillie sur le pan latéral 22 de l'opercule 18 auquel elle appartient, et, ce dernier étant en retrait par rapport à la paroi latérale 12, elle est, elle, sensiblement à niveau avec cette paroi latérale 12.

Par ailleurs, dans la forme de réalisation représentée, les moyens d'engagement propres à permettre de mettre en prise l'opercule 18 avec un tube 28 comportent au moins deux ergots 35 en saillie vers l'intérieur sur le contour intérieur de l'ouverture 32 que l'anse 30 délimite.

En pratique, ces ergots 35 sont mis à profit pour l'implantation des zones sécables 23, 25' assurant le maintien de l'opercule défonçable 15.

Autrement dit, ces zones sécables 23, 25' interviennent au bout des ergots 35.

Dans la forme de réalisation représentée, il y a ainsi trois ergots 35, à savoir un dans le prolongement de chacun des bras 24 du pan latéral 22 de l'opercule 18, et un en saillie sur le contour intérieur de la partie sommitale 33 de l'anse 30.

Ces ergots 35 s'étendent sensiblement à 120° deux à deux.

Corollairement, dans la forme de réalisation représentée, il est prévu, entre l'opercule 18 et l'une ou l'autre des parois 11, 12, à distance de la zone charnière 20 de cet opercule 18, pour le maintien de celui-ci, au moins une patte sécable 36.

Par exemple, et tel que représenté, deux pattes 36 sont prévues latéralement, entre le pan latéral 22 de cet opercule 18 et la paroi de fond 11, et, plus précisément, entre l'extrémité des jambages 31 de l'anse 30 solidaire de ce pan latéral 22 et cette paroi de fond 11, au raccordement de celle-ci avec la paroi latérale 12.

Enfin, dans la forme de réalisation représentée, la zone charnière 20 de l'opercule 18 ne s'étend que sur une partie de la ligne d'articulation correspondante.

En pratique, dans cette forme de réalisation, cette zone charnière 20 est fractionnée en pattes 20' distinctes.

Par exemple, et tel que représenté, ces pattes 20' sont au nombre de deux.

Pour le reste, les dispositions sont du même type que les précédentes, et la mise en oeuvre se fait également de manière semblable.

Mais, lorsqu'un tube 28 est engagé dans l'ouverture 32 délimitée par l'anse 30, il est avantageusement enserré en trois point par les ergots 35 correspondants, au bénéfice de sa tenue.

Il en est d'autant plus ainsi que, comme représenté sur les figures 4 et 5, ce tube 28 est usuellement un tube annelé, en sorte que les ergots 35 viennent s'insérer dans l'une de ses gorges.

Bien entendu, la présente invention ne se limite pas à la forme de réalisation décrite et représentée, mais englobe toute variante d'exécution.

## Revendications

1. Boîte d'encastrement du genre comportant une paroi de fond (11 ) et une paroi latérale (12), avec, prédécoupé dans sa paroi latérale (12), au moins un passage (14) occulté par un opercule défonçable (15), et, prédécoupé dans sa paroi de fond (11), en correspondance avec le passage (14) de la paroi latérale (12), un évidement (16), qui, mordant sur la paroi latérale (12), recoupe ce passage (14), et qui, lui aussi, est occulté par un opercule (18), **caractérisée en ce que** l'opercule (18) occultant l'évidement (16) de la paroi de fond (11) est articulé à demeure à celle-ci et est équipé de moyens d'engagement propres à permettre de le mettre en prise avec un tube (28) à engager dans le passage (14), de sorte que c'est ce tube (28) qui, lors de la mise en place de la boîte d'encastrement (10) dans la cloison creuse à équiper, ramène, automatiquement, et systématiquement, de lui-même, à sa position initiale d'occultation, l'opercule (18) associé à l'évidement (16) de la paroi de fond (11 ) de cette boîte d'encastrement.

2. Boîte d'encastrement suivant la revendication 1, **caractérisée en ce que** l'opercule (18) occultant l'évidement (16) de la paroi de fond (11) est articulé à demeure à celle-ci par une zone charnière (20).

3. Boîte d'encastrement suivant la revendication 2, **caractérisée en ce que** l'opercule (18) occultant l'évidement (16) de la paroi de fond (11) est d'un seul tenant avec celle-ci, en formant avec elle une seule et même pièce, et la zone charnière (20) par laquelle il est articulé à cette paroi de fond (11) est une zone de moindre épaisseur pour celle-ci.

4. Boîte d'encastrement suivant l'une quelconque des revendications 2, 3, **caractérisée en ce que** la zone charnière (20) ne s'étend que sur une partie de la ligne d'articulation correspondante.

5. Boîte d'encastrement suivant l'une quelconque des revendications 2 à 4, **caractérisée en ce que** la zone charnière (20) est fractionnée en pattes (20') distinctes.

6. Boîte d'encastrement suivant l'une quelconque des revendications 1 à 5, **caractérisée en ce que** l'opercule (18) occultant l'évidement (16) de la paroi de fond (11) se rattache par au moins une zone sécable (23) à l'opercule défonçable (15) occultant le passage (14) de la paroi latérale (12).

7. Boîte d'encastrement suivant l'une quelconque des revendications 1 à 6, **caractérisée en ce que** l'opercule (18) occultant l'évidement (16) de la paroi de fond (11 ) comporte, d'équerre l'un avec l'autre, deux pans (21, 22), à savoir, un pan de fond (21), qui appartient à la paroi de fond (11), et un pan latéral (22), qui appartient à la paroi latérale (12).

8. Boîte d'encastrement suivant les revendications 6 et 7, prises conjointement, **caractérisée en ce que** le pan latéral (22) de l'opercule (18) occultant l'évidement (16) de la paroi de fond (11) forme deux bras (24), qui, au contact de l'opercule défonçable (15) occultant le passage (14) de la paroi latérale (12), se terminent chacun par une zone sécable (23).

9. Boîte d'encastrement suivant la revendication 7, **caractérisée en ce que** le pan latéral (22) de l'opercule (18) occultant l'évidement (16) de la paroi de fond (11) se prolonge par une anse (30), qui suit le contour du passage (14) de la paroi latérale (12), en intervenant entre ce passage (14) et l'opercule défonçable (15) correspondant.

10. Boîte d'encastrement suivant les revendications 8 et 9, prises conjointement, **caractérisée en ce que** l'anse (30) se rattache aux bras (24) formés par ce plan latéral (22) qu'elle prolonge.

11. Boîte d'encastrement suivant la revendication 10, **caractérisée en ce que** l'anse (30) est en saillie sur le pan latéral (22).

12. Boîte d'encastrement suivant l'une quelconque des revendications 9 à 11, **caractérisée en ce que** l'opercule défonçable (15) occultant le passage (14) de la paroi latérale (12) se rattache par au moins une zone sécable (25') à l'anse (30).

13. Boîte d'encastrement suivant la revendication 12, **caractérisée en ce que** seule une zone sécable (25') est prévue à la partie sommitale (33) de l'anse (30).

14. Boîte d'encastrement suivant l'une quelconque des revendications 7 à 13, **caractérisée en ce que** le pan de fond (21) de l'opercule (18) occultant l'évidement (16) de la paroi de fond (11) a une épaisseur réduite par rapport à celle du reste de cette paroi de fond (11).

15. Boîte d'encastrement suivant la revendication 14, **caractérisée en ce que** la surface extérieure du pan de fond (21) de l'opercule (18) occultant l'évidement (16) de la paroi de fond (11 ) est en retrait par rapport à la surface extérieure du reste de celle-ci.

16. Boîte d'encastrement suivant l'une quelconque des revendications 7 à 15, **caractérisée en ce que** le pan latéral (22) de l'opercule (18) occultant l'évidement (16) de la paroi de fond (11) est en retrait vers l'intérieur par rapport à l'opercule défonçable (15) occultant le passage (14) de la paroi latérale (12).

17. Boîte d'encastrement suivant l'une quelconque des revendications 1 à 16, **caractérisée en ce que** l'opercule défonçable (15) occultant le passage (14) de la paroi latérale (12) est en retrait vers l'intérieur par rapport au reste de cette paroi latérale (12).

18. Boîte d'encastrement suivant l'une quelconque des revendications 1 à 17, **caractérisée en ce que** lesdits moyens d'engagement comportent un crochet (26), qui, en saillie sur la surface intérieure de l'opercule (18) occultant l'évidement (16) de la paroi de fond (11 ), s'étend en direction du passage (14) de la paroi latérale (12).

19. Boîte d'encastrement suivant la revendication 9, **caractérisée en ce que** lesdits moyens d'engagement comportent au moins deux ergots (35) en saillie sur le contour intérieur de l'ouverture (32) que l'anse (30) délimite.

20. Boîte d'encastrement suivant la revendication 19, **caractérisée en ce que** les zone sécables (23, 25') assurant le maintien de l'opercule défonçable (15) interviennent au bout des ergots (35).

## Claims

1. Flush-mounted box of the type comprising a base wall (11) and a side wall (12), with, precut into its side wall (12), at least one passage (14) obscured by a tear-off protective strip (15), and, precut into its base wall (11), corresponding to the passage (14) of the side wall (12), a recess (16) which, cutting into the side wall (12), continues this passage (14) and which is itself also obscured by a protective strip (18), **characterized in that** the protective strip (18) obscuring the recess (16) of the base wall (11) is articulated permanently to the latter and is equipped with engaging means suitable for allowing the recess to be connected to a tube (28) to be engaged in the passage (14), in order that it is this tube (28) which, when the flush-mounted box (10) is placed in the hollow partition to be equipped, automatically and systematically, itself, returns to its initial obscuring position the protective strip (18) associated with the recess (16) of the base wall (11) of this flush-mounted box.

2. Flush-mounted box according to claim 1, **characterized in that** the protective strip (18) obscuring the recess (16) of the base wall (11) is articulated permanently to the latter by a hinge zone (20).

3. Flush-mounted box according to claim 2, **characterized in that** the protective strip (18) obscuring the recess (16) of the base wall (11) is in one piece with the latter, forming with it one and the same piece, and the hinge zone (20) by which it is articulated to this base wall (11) is a zone of lesser thickness for the latter.

4. Flush-mounted box according to any one of claims 2, 3, **characterized in that** the hinge zone (20) extends only over a part of the corresponding articulation line.

5. Flush-mounted box according to any one of claims 2 to 4, **characterized in that** the hinge zone (20) is divided into separate grooves (20').

6. Flush-mounted box according to any one of claims 1 to 5, **characterized in that** the protective strip (18) obscuring the recess (16) of the base wall (11) is attached by at least one cuttable zone (23) to the tear-off protective strip (15) obscuring the passage (14) of the side wall (12).

7. Flush-mounted box according to any one of claims 1 to 6, **characterized in that** the protective strip (18) obscuring the recess (16) of the base wall (11) comprises, at right angles to each other, two faces (21, 22), i.e. a base face (21) which forms part of the base wall (11), and a side face (22) which forms part of the side wall (12).

8. Flush-mounted box according to claims 6 and 7, taken together, **characterized in that** the side face (22) of the protective strip (18) obscuring the recess (16) of the base wall (11) forms two arms (24) which, upon contact with the tear-off protective strip (15) obscuring the passage (14) of the side wall (12), each end in a cuttable zone (23).

9. Flush-mounted box according to claim 7, **characterized in that** the side face (22) of the protective strip (18) obscuring the recess (16) of the base wall (11) continues as a handle (30) which follows the contour of the passage (14) of the side wall (12), coming between this passage (14) and the corresponding tear-off protective strip (15).

10. Flush-mounted box according to claims 8 and 9, taken together, **characterized in that** the handle (30) is attached to the arms (24) formed by this side face (22) which the handle extends.

11. Flush-mounted box according to claim 10, **characterized in that** the handle (30) projects over the side face (22).

12. Flush-mounted box according to any one of claims 9 to 11, **characterized in that** the tear-off protective strip (15) obscuring the passage (14) of the side wall (12) is attached to the handle (30) by at least one cuttable zone (25').

13. Flush-mounted box according to claim 12, **characterized in that** only one cuttable zone (25') is provided at the top part (33) of the handle (30).

14. Flush-mounted box according to any one of claims 7 to 13, **characterized in that** the base face (21) of the protective strip (18) obscuring the recess (16) of the base wall (11) has a reduced thickness compared with that of the rest of this base wall (11).

15. Flush-mounted box according to claim 14, **characterized in that** the external surface of the base face (21) of the protective strip (18) obscuring the recess (16) of the base wall (11) is recessed relative to the external surface of the rest of the latter.

16. Flush-mounted box according to any one of claims 7 to 15, **characterized in that** the side face (22) of the protective strip (18) obscuring the recess (16) of the base wall (11) is recessed towards the inside relative to the tear-off protective strip (15) obscuring the passage (14) of the side wall (12).

17. Flush-mounted box according to any one of claims 1 to 16, **characterized in that** the tear-off protective strip (15) obscuring the passage (14) of the side wall (12) is recessed towards the inside relative to the rest of this side wall (12).

18. Flush-mounted box according to any one of claims 1 to 17, **characterized in that** the said engaging means comprise a hook (26) which, projecting over the internal surface of the protective strip (18) obscuring the recess (16) of the base wall (11), extends in the direction of the passage (14) of the side wall (12).

19. Flush-mounted box according to claim 9, **characterized in that** the said engaging means comprise at least two lugs (35) projecting over the internal contour of the opening (32) which the handle (30) defines.

20. Flush-mounted box according to claim 19, **characterized in that** the cuttable zones (23, 25') holding the tear-off protective strip (15) are positioned at the end of the lugs (35).

## Patentansprüche

1. Unterputzdose, umfassend eine Bodenwand (11) und eine Seitenwand (12) mit, in ihrer Seitenwand (12) vorausgeschnitten, mindestens einem Durchgang (14), der durch einen eindrückbaren Deckel (15) bedeckt ist, und, in ihrer Bodenwand (11) vorausgeschnitten, in Entsprechung mit dem Durchgang (14) der Seitenwand (12), einer Aussparung (16), die, in die Seitenwand (12) eingreifend, diesen Durchgang (14) schneidet und ebenfalls durch einen Deckel (18) bedeckt ist, **dadurch gekennzeichnet, daß** der die Aussparung (16) der Bodenwand (11) bedeckende Deckel (18) an dieser bleibend angelenkt ist und mit Einführungsmitteln ausgerüstet ist, die geeignet sind, ihn mit einem Rohr (28) in Eingriff zu bringen, das in den Durchgang (14) einzuführen ist, so daß der der Aussparung (16) der Bodenwand (11) dieser Unterputzdose zugeordnete Deckel (18) bei Einsetzen der Unterputzdose (10) in die zu bestückende hohle Wand durch dieses Rohr (28) automatisch und systematisch von selbst in seine anfängliche Bedeckungsstellung gebracht wird.

2. Unterputzdose nach Anspruch 1, **dadurch gekennzeichnet, daß** der die Aussparung (16) der Bodenwand (11) bedeckende Deckel (18) an dieser über eine Scharnierzone (20) bleibend angelenkt ist.

3. Unterputzdose nach Anspruch 2, **dadurch gekennzeichnet, daß** der die Aussparung (16) der Bodenwand (11) bedeckende Deckel (18) einstückig mit dieser ausgeführt ist, indem er mit ihr ein und dasselbe Stück bildet, und die Scharnierzone (20), über die er an dieser Bodenwand (11) angelenkt ist, eine Zone geringerer Dicke von dieser ist.

4. Unterputzdose nach einem der Ansprüche 2, 3, **dadurch gekennzeichnet, daß** die Scharnierzone (20) sich nur über einen Teil der entsprechenden Gelenklinie erstreckt.

5. Unterputzdose nach einem der Ansprüche 2 bis 4, **dadurch gekennzeichnet, daß** die Scharnierzone (20) in getrennte Lappen (20') unterteilt ist.

6. Unterputzdose nach einem der Ansprüche 1 bis 5, **dadurch gekennzeichnet, daß** der die Aussparung (16) der Bodenwand (11) bedeckende Deckel (18) über mindestens eine durchtrennbare Zone (23) an den den Durchgang (14) der Seitenwand (12) bedeckenden eindrückbaren Deckel (15) anschließt.

7. Unterputzdose nach einem der Ansprüche 1 bis 6, **dadurch gekennzeichnet, daß** der die Aussparung (16) der Bodenwand (11) bedeckende Deckel (18) zwei zueinander rechtwinklige Wangen (21, 22) umfaßt, und zwar eine Bodenwange (21), die zur Bodenwand (11) gehört, und eine Seitenwange (22), die zur Seitenwand (12) gehört.

8. Unterputzdose nach den Ansprüchen 6 und 7 zusammen, **dadurch gekennzeichnet, daß** die Seitenwange (22) des die Aussparung (16) der Bodenwand (11) bedeckenden Deckels (18) zwei Arme (24) bildet, die, im Kontakt mit dem den Durchgang (14) der Seitenwand (12) bedeckenden eindrückbaren Deckel (15), jeweils mit einer durchtrennbaren Zone (23) enden.

9. Unterputzdose nach Anspruch 7, **dadurch gekennzeichnet, daß** die Seitenwange (22) des die Aussparung (16) der Bodenwand (11) bedeckenden Deckels (18) durch einen Bügel (30) verlängert ist, der dem Umriß des Durchgangs (14) der Seitenwand (12) folgt, indem er zwischen diesem Durchgang (14) und dem entsprechenden eindrückbaren Deckel (15) angeordnet ist.

10. Unterputzdose nach den Ansprüchen 8 und 9 zusammen, **dadurch gekennzeichnet , daß** der Bügel (30) an die Arme (24) anschließt, die von dieser Seitenwange (22), die er verlängert, gebildet sind.

11. Unterputzdose nach Anspruch 10, **dadurch gekennzeichnet, daß** der Bügel (30) auf der Seitenwange (22) vorsteht.

12. Unterputzdose nach einem der Ansprüche 9 bis 11, **dadurch gekennzeichnet, daß** der den Durchgang (14) der Seitenwand (12) bedeckende eindrückbare Deckel (15) über mindestens eine durchtrennbare Zone (25') an den Bügel (30) anschließt.

13. Unterputzdose nach Anspruch 12, **dadurch gekennzeichnet, daß** nur eine durchtrennbare Zone (25') am Scheitelteil (33) des Bügels (30) vorgesehen ist.

14. Unterputzdose nach einem der Ansprüche 7 bis 13, **dadurch gekennzeichnet, daß** die Bodenwange (21) des die Aussparung (16) der Bodenwand (11) bedeckenden Deckels (18) eine Dicke besitzt, die bezüglich der Dicke des Rests dieser Bodenwand (11) reduziert ist.

15. Unterputzdose nach Anspruch 14, **dadurch gekennzeichnet, daß** die Außenfläche der Bodenwange (21) des die Aussparung (16) der Bodenwand (11) bedeckenden Deckels (18) bezüglich der Außenfläche des Rests von dieser zurückversetzt ist.

16. Unterputzdose nach einem der Ansprüche 7 bis 15, **dadurch gekennzeichnet, daß** die Seitenwange (22) des die Aussparung (16) der Bodenwand (11) bedeckenden Deckels (18) bezüglich des den Durchgang (14) der Seitenwand (12) bedeckenden eindrückbaren Deckels (15) nach innen zurückversetzt ist.

17. Unterputzdose nach einem der Ansprüche 1 bis 16, **dadurch gekennzeichnet, daß** der den Durchgang (14) der Seitenwand (12) bedeckende eindrückbare Deckel (15) bezüglich des Rests dieser Seitenwand (12) nach innen zurückversetzt ist.

18. Unterputzdose nach einem der Ansprüche 1 bis 17, **dadurch gekennzeichnet, daß** die Einführungsmittel einen Haken (26) umfassen, der an der Innenfläche des die Aussparung (16) der Bodenwand (11) bedeckenden Deckels (18) vorsteht und sich in Richtung des Durchgangs (14) der Seitenwand (12) erstreckt.

19. Unterputzdose nach Anspruch 9, **dadurch gekennzeichnet, daß** die Einführungsmittel mindestens zwei Vorsprünge (35) umfassen, die an dem Innenumriß der von dem Bügel (30) begrenzten Öffnung (32) vorstehen.

20. Unterputzdose nach Anspruch 19, **dadurch gekennzeichnet, daß** die durchtrennbaren Zonen (23, 25'), die den Halt des eindrückbaren Deckels (15) gewährleisten, am Ende der Vorsprünge (35) vorgesehen sind.
